Europäisches Patentamt

European Patent Office

Office européen des brevets

(11) Numéro de publication: **0 189 691**
**A1**

## (12) DEMANDE DE BREVET EUROPEEN

(21) Numéro de dépôt: **85402474.2**

(22) Date de dépôt: **12.12.85**

(51) Int. Cl.⁴: **G 07 G 1/12**
**G 07 F 7/02**

(30) Priorité: **13.12.84 FR 8419071**

(43) Date de publication de la demande:
**06.08.86 Bulletin 86/32**

(84) Etats contractants désignés:
**AT BE CH DE GB IT LI LU NL SE**

(71) Demandeur: **SOCIETE GENERALE DES COOPERATIVES DE CONSOMMATION**
**27, 33, quai A. le Gallo**
**F-92517 Boulogne-Billancourt Cédex(FR)**

(72) Inventeur: **Bussenault, Michel Jacques**
**4, route du Curé**
**F-92410 Ville d'Avray(FR)**

(72) Inventeur: **Fenal, François Jean Emmanuel**
**26, rue Rouget de l'Isle**
**F-94100 Saint-Maur(FR)**

(72) Inventeur: **Fleury, François Paul**
**6, rue Saint Vivien**
**F-17100 Saintes(FR)**

(74) Mandataire: **Derambure, Christian**
**Cabinet BUGNION ASSOCIES SARL 116, boulevard Haussmann**
**F-75008 Paris(FR)**

(54) **Procédé pour enregistrer les achats effectués par ces clients individuels, carte magnétique et lecteur encodeur pour la mise en oeuvre du procédé.**

(57) L'invention concerne un procédé pour enregistrer les achats effectués par des clients individuels disposant chacun d'une carte à piste magnétique personnelle, propre à un réseau de magasins. On enregistre sur la piste magnétique de la carte du client le total des achats effectués par ce client dans les magasins du réseau.

FIG.1

## Procédé pour enregistrer les achats effectués par des clients individuels, carte magnétique et lecteur-encodeur pour la mise en oeuvre du procédé.

L'invention concerne un procédé pour enregistrer les achats effectués par des clients individuels disposant chacun d'une carte à piste magnétique personnelle propre à un réseau de magasin, la carte magnétique et le lecteur encodeur pour la mise en oeuvre du procédé.

On sait que dans certains magasins, les clients bénéficient de ristournes ou similaires, sur le montant total des achats qu'ils effectuent pendant une certaine période — par exemple l'année — ou lorsque la somme des montants de leurs achats — avec ou sans limite de temps — dépasse un certain seuil ou après un nombre d'achats préfixé. Pour que cette ristourne puisse être payée, le client doit fournir des preuves de ses achats (identification du magasin, date et montant de l'achat).

Cela est possible avec des tickets de caisse dont les montants peuvent être additonnés par le personnel du magasin concerné et gardés ultérieurement par le magasin pour contrôle ou justification. C'est également pourquoi des coopératives de consommation donnent au client, à l'occasion de chaque achat, un ou plusieurs timbres-valeur dont le montant ou la somme des montants correspond au
montant de l'achat effectué. Différentes valeurs de
timbres sont prévues pour permettre les adaptations nécessaires. Le client garde et accumule les timbres qu'il
obtient, puis les répartit selon leur valeur et les colle
de façon homogène sur des feuilles récapitulatives prévues à cet effet. Ces feuilles récapitulatives remplies
totalement ou non de timbres sont remises à la coopérative de consommation, notamment aux points de vente
habituels du client, par exemple annuellement. Le personnel de la coopérative de consommation, en particulier
des points de vente , calcule pour chaque client le
montant total des timbres remis. Ce montant total sert
de base au calcul de la ristourne dont bénéficie le client.
Dans un autre système possible, chaque client qui le
souhaite dispose d'une carte magnétique à l'enseigne du
magasin concerné, comportant un code d'identification
du client. A chaque caisse du magasin se trouve un
lecteur à clavier. Les différents lecteurs à claviers
sont connectés à un ordinateur central. A chaque achat,
le personnel du magasin fait passer la carte remise
par le client dans le lecteur — ce qui permet l'identification du client — puis frappe sur le clavier le
montant de l'achat effectué qui est transmis à l'ordinteur central pour être additionné au montant précédent
et stocké au lieu et place du montant précédent.
Ces montants stockés dans la mémoire d'un ordinatur
central peuvent également servir de base au calcul de
la ristourne du client.

Le système des tickets de caisse est, par nature, mal
commode et ne se prête pas à un usage permanent et sur
une grande échelle. Il a l'inconvénient d'être très
facilement falsifiable, de faire perdre au client — qi
peut souhaiter les garder pour contrôle — les tickets
de caisse, de conduire à des documents justificatifs
de format très variable.

3 0189691

Le système des timbres a donné satisfaction tant aux coopératives de consommation qu'aux clients pendant de nombreuses années. Mais, il se révèle être, à l'usage, mal commode et coûteux: chaque point de vente doit posséder un stock de timbres de différentes valeurs, afin que chaque client puisse recevoir un montant en timbres correspondant au montant de l'achat qu'il effectue; les timbres peuvent être endommagés, déchirés, volés, perdus; la constitution des feuilles récapitulatives est fastidieuse; le traitement ultérieur de ces feuilles récapitulatives est également fastidieux et onéreux; leur stockage est volumineux. Ce système manque également de souplesse : certains clients perçoivent des timbres qu'ils n'utilisent pas ou utilisent tardivement; il n'est pas possible d'utiliser ce système pour des opérations de promotion.

Le système de la carte d'identification combiné à un ordinateur central de traitement et de stockage n'est concevable, à des conditions économiques satisfaisantes, que dans le cas d'un magasin unique à plusieurs caisses ou d'un petit nombre de magasins peu éloignés les uns des autres. Ce système est coûteux en investissement — l'ordinateur central devant être suffisamment puissant — et en fonctionnement — du fait des communications nécessaires entre les lecteurs situés dans les magasins et l'ordinateur central pour le transfert de l'information. Ce système n'est donc pas adapté au cas d'un grand nombre de points de vente, certains petits, répartis sur une vaste région — par exemple le territoire national.

L'invention a pour objet de remédier à ces inconvénients. A cet effet, elle propose un procédé pour enregistrer les achats effectués par des clients individuels disposant chacun d'une carte à piste magnétique personnelle

propre à un réseau de magasins, la carte magnétique
destinée au client et le lecteur-encodeur se trouvant
dans le magasin permettant la mise en oeuvre du procédé.
L'enregistrement des achats est réalisé sans avoir
recours aux systèmes des tickets de caisse ou des timbres
ou à un ordinateur central à capacité mémoire importante.
L'invention vise également à conserver les avantages
du système des timbres à savoir son caractère décentralisé.

Selon l'invention, on enregistre sur la piste magnétique
de la carte du client les achats effectués par ce client
dans les magasins du réseau concerné. Cet enregistrement
est effectué pendant une période de référence déterminée
— par exemple l'année. Au début de chaque période de
référence, on enregistre sur la piste magnétique du
client le millésime de cette période.

Pour enregistrer les achats, en nombre et/ou en valeur,
on réalise d'abord une lecture du ou des totaux antérieurs
en nombre et/ou en valeur, tels qu'ils sont enregistrés
sur la piste magnétique; puis, on met en mémoire ceux
ou ces totaux antérieurs dans une mémoire externe;
puis, on ajoute au(x) total ou totaux antérieurs le
ou les totaux de l'achat en cours, ce qui donne un ou
des nouveaux totaux; enfin, on enregistre sur la piste
magnétique le ou les nouveaux totaux aux lieu et place
du ou des totaux antérieurs.

Pour ajouter au(x) total ou totaux antérieurs le ou les
totaux de l'achat en cours, on transfère ce ou ces
totaux de l'achat en cours dans la mémoire externe et
on réalise la ou les additions grâce à un microprocesseur.

Selon l'invention, on peut également enregistrer sur la
piste magnétique une allocation correspondant à une promotion ou à une vente avec pré-paiement. Pour enregistrer une allocation, on réalise d'abord la lecture de l'allocation antérieure telle qu'elle est enregistrée sur la piste magnétique; puis, on met en mémoire cette allocation antérieure dans une mémoire externe; puis, on soustrait de cette allocation antérieure l'allocation en cours d'utilisation, ce qui donne une nouvelle allocation; enfin, on enregistre sur la piste magnétique cette nouvelle allocation au lieu et place de l'allocation antérieure. L'allocation est enregistrée en nombre et en valeur.

Une carte magnétique pour la mise en oeuvre du procédé comporte une piste magnétique sur laquelle peuvent être enregistrées des informations, codes, valeurs, données susceptibles d'être lus et modifiés par simple passage de la carte dans un lecteur approprié. Sur la piste magnétique sont enregistrés le ou les numéros de comptes du client et au moins une zone d'enregistrement de données correspondant aux achats effectués. Une telle zone peut comprendre plusieurs sous-zones d'enregistrement (millésime de la période de référence, montant total des achats effectués, nombre total d'achats ou d'opérations). Sur la piste magnétique, peut également être prévue au moins une zone d'enregistrement pour des opérations d'allocation. Cette zone d'enregistrement peut également comporter plusieurs sous-zones.

Un lecteur encodeur pour la mise en oeuvre du procédé au moyen d'une carte magnétique telle que celle qui vient d'être décrite comprend des moyens de lecture et d'encodage de la carte magnétique, des moyens de commande de la lecture et de l'encodage et au moins un écran de visualisation. Les moyens de lecture et d'encodage sont reliés à un microprocesseur via un bus auquel est relié l'écran via un contrôleur d'affichage.

Le microprocesseur est relié à une mémoire morte programmable et à une mémoire vive de stockage.

Ainsi, selon l'invention, il y a totalisation des
achats effectués par le client à l'occasion de chaque
nouvel achat et enregistrement des nouveaux totaux
des achats effectués en nombre et en valeur. A l'occasion de chaque nouvel achat, le client présente sa
carte magnétique et les nombres et montants enregistrés
sur celle-ci sont modifiés pour tenir compte de ce
dernier achat. Le procédé employé est donc d'une
mise en oeuvre simple. Il évite le recours à des timbres
ou aux tickets de caisse. Il évite également la mise
en oeuvre d'un ordinateur central à mémoire importante
et le recours à des liaisons téléphoniques fréquentes,
nombreuses et pouvant être de longue distance entre
l'ordinateur central et les caisses des points de vente.

L'invention a de nombreux autres avantages : le total
des achats effectués par chaque client étant enregistré,
en nombre et en valeur sur sa propre carte magnétique,
il est facile pour lui de suivre ses dépenses. La carte
magnétique comporte des zones d'enregistrement pouvant
être utilisées à d'autres fins, soit pour contenir
d'autres éléments d'identification, soit pour comporter
des éléments relatifs à des opérations d'allocations.
Ces allocations sont des opérations de promotion
organisées par le magasin ou des pré-paiements tels que
colis épargne, tickets utilisables dans les restaurants,
produits variés (essence, etc...). Plus généralement,
il s'agit d'allocations attribuées aux clients, avec
ou sans contre-partie, ces allocations étant de nature
financière (une somme d'argent), temporelle (un crédit
de temps), arithmétique (un nombre), ou autre.
Enfin, le lecteur-encodeur est d'une mise en oeuvre très simple par le personnel du magasin. Dans le cas où il comporte une mémoire de conservation des cumuls des différentes opérations réalisées dans le magasin, cela permet une meilleure gestion du magasin.

Les autres caractéristiques de l'invention résulteront de la description qui suivra en référence aux dessins annexés dans lesquels :

- La Figure 1 est une vue en perspective, schématique, d'un lecteur-encodeur selon l'invention.

- La Figure 2 est un bloc-diagramme du circuit électronique de l'appareil représenté sur la Figure 1.

L'invention concerne un procédé pour enregistrer les achats effectués par des clients individuels dans des magasins ou des points de vente de même enseigne ou appartenant à un même réseau. L'invention s'applique particulièrement à des magasins faisant bénéficier leurs clients de ristournes tenant compte du montant total des achats effectués pendant une certaine période de référence — notamment l'année calendaire —.
Elle s'applique également au cas de magasins prévoyant des promotions ou des pré-paiements.

L'invention est décrite dans le cadre de cette application particulière. Mais, il est clair qu'elle peut être utilisée dans d'autres applications.

Chaque client ou chacun des clients qui le souhaite, dispose d'une carte magnétique (non représentée), personnelle et propre aux magasins ou points de vente concernés.

L'emploi d'une carte personnelle dont dispose les clients

8 0189691

qui le souhaitent présente de nombreux avantages :
tout d'abord, le bénéfice de la carte peut être lié,
le cas échéant, à certaines conditions. Ensuite, le
bénéfice de la carte démontre la fidélité que le client
éprouve pour le réseau de magasins. Pour le réseau de
magasins, l'affectation, a priori, d'une carte à un
client, permet un meilleur suivi de celui-ci, un meilleur suivi des magasins eux-mêmes (par une information
améliorée), de ne faire bénéficier des ristournes que
les clients disposant d'une carte et des promotions
ou du pré-paiement que de certains possesseurs de cartes
— le cas échéant. En d'autres termes, l'emploi d'une
telle carte magnétique conduit à une très grande flexibilité dans les utilisations possibles, combinée à une
plus grande et meilleure information.

La carte magnétique dont le format et les caractéristiques générales sont connus ou à la portée de l'homme de
métier, comporte des moyens d'identification visuels et/ou
magnétiques et/ou optiques de l'enseigne ou du nom du réseau des
magasins ou des points de vente concernés, par exemple
constitués par des indications en clair portées sur la
carte, des couleurs, des dessins, etc. La carte comporte
également au moins une piste magnétique sur laquelle
peuvent être enregistrées des informations, code,
valeur, données, etc., susceptibles d'être lus et
modifiés par simple passage de la carte dans un lecteur
encodeur approprié. La carte comporte enfin, préalablement
imprimés de quelque manière que ce soit — par exemple
par embossage — et de façon visible, des éléments
d'identification du client (nom et prénom, adresse, code
ou numéro client ou de sociétaire dans le cas de coopérative de consommation ou similaire — par exemple à huit
positions —, code ou numéro d'identification du magasin
particulier auquel est rattaché le client — par exemple à six positions −), la date ou millésime d'émission ou
de péremption de la carte.

L'emploi d'un code ou numéro client, numérique ou alphanumérique , est connu en soi. Il vise à permettre une
identification biunivoque du client, même en cas d'homonymie. Le magasin auquel le client est rattaché est,
par exemple, le magasin qui a émis la carte du client,
généralement le magasin habituel du client. Ce magasin
est identifié de façon biunivoque par un code ou numéro.
Cependant, le client peut faire usage de sa carte dans
tout le magasin du réseau ou de l'enseigne considérée,
sauf à prévoir que, de façon permanente ou temporaire,
certains magasins du réseau ou à l'enseigne considérée
excluent le bénéfice de la carte. On peut alors concevoir
que les magasins soient répartis en plusieurs groupes
distincts, offrant des possibilités d'emploi différentes
des cartes clients, le code ou numéro d'identification
du magasin comportant alors des éléments d'identification
du groupe auquel il appartient.

L'invention est plus particulièrement destinée à des
magasins en très grand nombre, de taille plus ou moins
importante, fixes, à demeure ou mobiles (par exemple en
camions itinérants ou sur des marchés), permanents ou non,
situés sur un territoire pouvant être très vaste (par
exemple un pays).

Sur la piste magnétique sont préalablement enregistrés
le ou les codes ou numéros de comptes du client et sont
définies une ou généralement plusieurs zones d'enregistrement des données correspondant aux achats réalisés.

Le code ou numéro de compte comporte le code ou numéro
client et éventuellement d'autres codes ou numéros, notamment le numéro de compte permanent du client s'il en possède un.

Il est prévu, par exemple, trois zones d'enregistrement distinctes, chacune comprenant comme données un millésime correspondant à la période de référence concernée par les achats enregistrés dans cette zone, le montant total des achats du client enregistrés pendant cette période de référence et, enfin, le nombre d'achats ou d'opérations effectués pendant cette période de référence. Chacune des zones d'enregistrement est donc partagée en sous-zones, chacune comportant un nombre de positions appropriées pour permettre un enregistrement des données correspondantes. Des positions supplémentaires assurent la séparation des zones et des sous-zones. Par exemple, le millésime comprend une position unique, le montant des achats six positions et le nombre de passages trois positions.

Dans cette forme d'exécution les trois zones d'enregistrement sont utilisées successivement dans le temps. Dans une autre forme d'exécution plus spécialement utilisable avec des magasins répartis en plusieurs groupes distincts, les trois zones sont utilisées pendant les mêmes périodes de temps mais selon les groupes de magasins. Chaque zone peut alors comporter non pas un millésime mais un index de groupe.

Préférentiellement, il est également prévu sur la piste magnétique une zone distincte, supplémentaire, pour les opérations d'allocations (promotions ou pré-paiement) comprenant également plusieurs sous-zones d'enregistrement des données correspondant à ces opérations, par exemple le numéro d'opération, le nombre de passages pendant la durée de l'opération et l'allocation attribuée pour cette opération. Le numéro d'opération est un code, par exemple à deux positions, permettant d'identifier, de façon biunivoque, l'opération de promotion ou de pré-paiement envisagée. En effet, on peut concevoir de nombreuses opérations distinctes successives au cours de l'année. L'allocation attribuée s'entend d'un montant en francs, ou d'une durée, ou d'un nombre, ou d'une toute autre valeur. Par exemple, six positions lui sont réservées.

L'enregistrement des achats et l'enregistrement des allocations, correspondent à la même logique générale. Dans le cas de l'enregistrement des achats, la carte est progressivement chargée du montant de ces achats alors que dans l'enregistrement d'une allocation, la carte est progressivement déchargée de la valeur de l'allocation initiale. En variante l'allocation est calculée par addition, exactement comme pour les achats, mais pendant une période différente — généralement plus courte et incluse dans — de la période de référence utilisée pour les acheter.

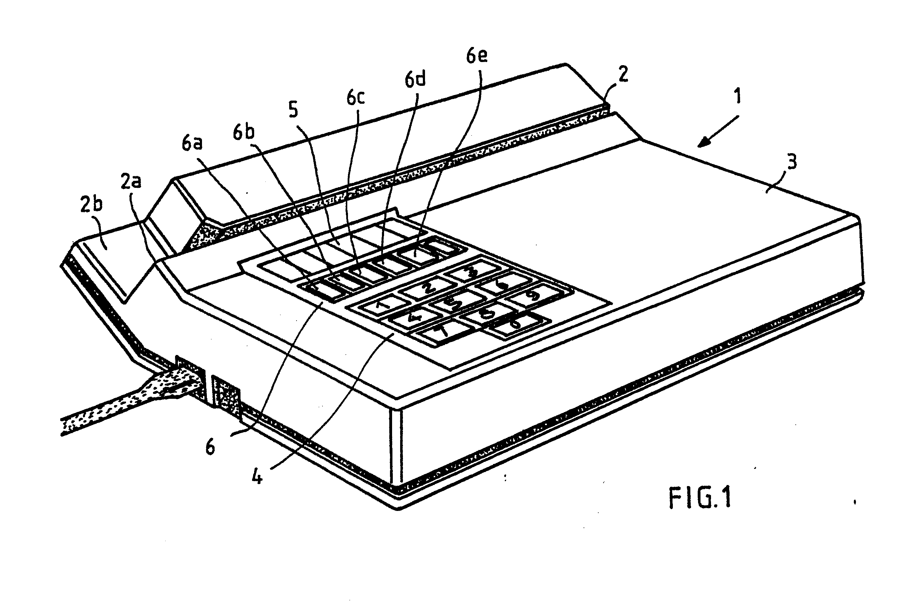

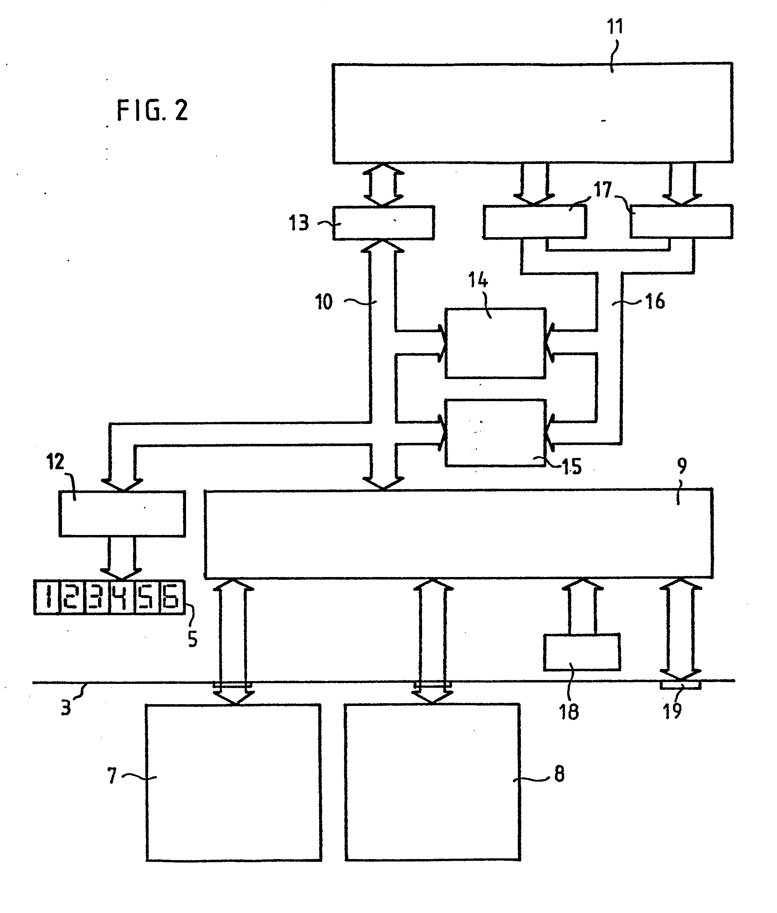

Dans chaque magasin se trouve au moins un lecteur-encodeur tel que celui représenté sur la Figure 1 et permettant la mise en oeuvre du procédé. Généralement, un tel lecteur-encodeur se trouve à chaque caisse du magasin. Ce lecteur-encodeur comporte un coffret 1 dans lequel sont logés des moyens de lecture et d'encodage de carte magnétique, un microprocesseur, et les mémoires et circuits annexes qui seront décrits en détail ci-dessous en référence à la Figure 2.

Dans la forme de réalisation représentée, le coffret 1 présente vers l'arrière une fente 2 pour recevoir et guider la carte magnétique qui est introduite à une extrémité de la fente 2 — par exemple gauche —
puis est déplacée le long de la fente 2 et passe ainsi
devant la tête des moyens de lecture et d'encodage et
enfin est sortie à l'autre extrémité de la fente 2.
La face supérieure 3 du coffret 1 comprend un clavier
numérique 4, à dix positions (0 à 9), un écran de
visualisation 5 à six positions, et un clavier fonctionnel 6 comportant le nombre de touches approprié
(par exemple six).

Préférentiellement, l'extrémité d'entrée de la fente
comporte, d'un côté, une butée transversale 2a, coplanaire à la fente et, du côté opposé un espace vide
2b, ce qui permet de placer correctement et sans difficulté la carte magnétique.

En variante, le lecteur encodeur peut comporter non pas
une fente telle que celle décrite précédemment mais une
ouverture unique dans laquelle est introduite la carte
magnétique et de laquelle elle sort après chaque opération de lecture ou d'encodage.

L'écran 5 peut faire l'objet de nombreuses variantes :
tout d'abord, il peut comporter un nombre de positions
plus important, ce qui autorise l'affichage simultané
de plusieurs variables ou données; ensuite, il peut être
associé à des moyens électriques de basculement permettant l'affichage alternativement de plusieurs (deux ou
plus) variables ou données; enfin, il peut comporter
plusieurs écrans permettant de visualiser séparément
plusieurs variables. Il va de soi que ces variantes
peuvent éventuellement être combinées entre elles.

En variante, le lecteur-encodeur comporte également des
entrées, sorties ou moyens de liaison permettant de connecter ou d'associer le lecteur-encodeur à d'autres appareils de saisie, de stockage, d'affichage, de communication, tels que caisses enregistreuses imprimantes, modems, terminaux portables, mémoires auxiliaires, systèmes vidéotex.

Le lecteur-encodeur comporte enfin, sur le coffret 1, un contacteur rotatif de changement de zone de traitement de la carte magnétique. Ce contacteur est préférentiellement placé en une zone difficilement accessible ou protégée, pour éviter les manipulations intempestives et malencontreuses. Il permet le changement soit de millésime, soit de groupe de magasins concernés.

On se réfère maintenant à la Figure 2 sur laquelle les claviers numérique 4 et fonctionnel 6 sont représentés schématiquement en 7 en tant que moyens de commande. Les moyens de lecture et d'encodage 8 de cartes magnétiques sont connus en soi et sont reliés par une interface 9 à une entrée sortie série 19 et via un bus pour les données 10, au microprocesseur 11. L'écran 5 est relié au bus 10 via un contrôleur d'affichage 12. Le microprocesseur 11 lit des données et envoie des données au bus 10 via un circuit de transmission et de réception 13. Le bus 10 est relié à une mémoire morte programmable 14 et à une mémoire vive de stockage 15.

Un bus d'adresses 16 est également relié aux mémoires morte 14 et vive 15. Les adresses sont envoyées au bus 16 par le microprocesseur 11 via des circuits d'attaque 17. En variante, la mémoire vive 15 est assistée par une alimentation batterie permettant de conserver un certain temps les informations contenues dans celle-ci en cas de coupure de l'alimentation générale. Enfin, il est prévu le contacteur rotatif 18 de changement de zone.

La description qui précède se réfère au cas d'une carte
magnétique comportant une piste magnétique unique. Mais,
l'invention est également applicable au cas d'une carte
magnétique comportant plusieurs pistes. Dans ce cas,
le nombre des données fixes ou variables pouvant être
enregistrées peut être plus important, ce qui permet,
par exemple, de multiplier les zones de promotion ou
de pré-paiement en autorisant ainsi un usage simultané
de celles-ci.

A l'occasion d'un nouvel achat du client, le ou la
caissière compose sur le clavier 4 le montant de
l'achat effectué, qui est placé dans la mémoire vive 15
du lecteur-encodeur. En variante, ce montant peut être
transmis directement par la caisse enregistreuse connectée au lecteur-encodeur via l'entrée sortie 19.
Puis, le ou la caissière passe la carte magnétique
du client dans la fente 2 du lecteur-encodeur. La piste
magnétique de la carte est lue par le lecteur 8.
Les totaux antérieurs des achats, en nombres et en valeur,
enregistrés sur la carte et lus par le lecteur 8 sont
placés dans la mémoire vive 15 du lecteur encodeur et
transférés ainsi que le montant de l'achat en cours
dans le microprocesseur 11 qui ajoute une opération au
total antérieur en nombres, et le montant de l'achat
en cours au total antérieur en valeur. Les totaux antérieurs en nombres et en valeur sont remplacés dans la
mémoire vive 15 du lecteur-encodeur par ces nouveaux
totaux tels qu'ils ont été calculés par le microprocesseur 11.

Ensuite, le ou la caissière passe de nouveau la carte
magnétique du client dans la fente 2 et les nouveaux
totaux résultant de l'achat qui vient d'être effectué
sont alors enregistrés sur la piste magnétique de la carte du client au lieu et place des totaux antérieurs correspondant à tous les achats précédents.

Une touche "Annulation" 6d du clavier fonctionnel 6 permet, si elle est actionnée, de revenir au début du cycle opératoire, afin de corriger les erreurs de manipulation ou d'enregistrement.

Le contrôle de l'enregistrement peut être effectué par un troisième passage de la carte dans la fente 2, ce qui permet une relecture des nouveaux totaux inscrits sur la piste magnétique. En cas d'enregistrement défectueux, un message d'erreur apparaît sur l'écran 5 et une nouvelle tentative d'enregistrement peut être effectuée par un quatrième passage de la carte dans la fente 2, pendant un délai commandé par une temporisation. Cette opération de contrôle peut être imposée par programme. Si la deuxième tentative d'enregistrement des nouveaux totaux sur la piste magnétique échoue, un message de rejet de la carte apparaît sur l'écran 5.

Une touche 6a du clavier fonctionnel 6 permet l'affichage sur l'écran 5 des différentes informations ou données d'achat se trouvant sur la piste magnétique de la carte.

A la fin de la période de référence des ristournes, correspondant au millésime considéré et lorsque le client doit fournir au magasin le montant total des achats qu'il a réalisés et qui ouvrent droit à la ristourne, il suffit de faire passer la carte magnétique dans le lecteur-encodeur et, en appuyant sur la touche 6a du clavier fonctionnel 6, de lire le montant total des achats enregistrés au titre de cette période ainsi que le nombre d'opérations effectuées.

Le montant total des achats enregistrés au titre de cette période ainsi que leur nombre peut éventuellement être imprimé grâce à une imprimante connectée au lecteur-encodeur, ou encore, stocké dans la mémoire terminable portable avec le numéro d'identification du client pour être ultérieurement transmis à un centre de traitement informatique.

Le ou la caissière peut alors actionner le contacteur rotatif de changement de zone, ce qui va permettre d'enregistrer les achats de la période de référence à venir dans une nouvelle zone d'enregistrement, le millésime de cette période à venir figurant dans cette nouvelle zone. Les enregistrements figurant dans la zone précédente au titre de la période venant de se terminer restent enregistrés dans cette zone. La carte peut comporter par exemple trois zones d'enregistrement permettant donc d'enregistrer des achats pendant trois périodes.

Dans le cas où la carte est utilisée pour des magasins de différents groupes correspondant à différentes zones d'enregistrement, le code du groupe correspondant se trouvant dans la zone est reconnu, ce qui permet d'affecter l'achat de la zone d'enregistrement appropriée pour ce groupe de magasins. Le ou la caissière peut alors utiliser le contacteur rotatif pour modifier les zones concernées.

Dans le cas d'une allocation (promotion organisée par le magasin ou vente avec pré-paiement), le lecteur-encodeur est tout d'abord initialisé par passage d'une carte magnétique spécifique à cette allocation, dont le contenu est placé dans une zone particulière de la mémoire vive 15 après reconnaissance par le microprocesseur 11 de sa nature particulière, grâce au numéro d'identification de la carte d'allocation.

En variante, cette initialisation peut être effectuée au clavier après reconnaissance d'une carte d'autorisation ou téléchargée via un modem.

Le chargement de la carte magnétique du client, en nombre maximum d'opérations et en montant d'allocation est effectué automatiquement lors de l'utilisation de la carte magnétique du client, par exemple à l'occasion d'un achat. Le chargement peut également être effectué au cours d'une opération propre de chargement.

Le déchargement de la carte magnétique du client lors de l'utilisation partielle ou totale de l'allocation en nombres ou en valeur, par le client, est précédé par l'appui par le ou la caissière sur une touche fonctionnelle 6c du clavier fonctionnel 6.
Le déroulement de la procédure est alors similaire à celui de l'enregistrement d'un achat courant, à savoir:
introduction du montant utilisé d'allocation par le client grâce au clavier numérique 4,
passage de la carte pour lecture,
nouveau passage de la carte pour enregistrement,
passage ultérieur de la carte pour contrôle de l'enregistrement,
nouvelle tentative d'enregistrement en cas d'enregistrement défectueux signalé par un message d'erreur sur l'écran 5.

L'allocation est enregistrée comme l'achat en nombres et en valeur. Dans le cas d'une allocation par chargement successif (comme pour les achats) et non par déchargement, on procède de la même manière que pour les achats, la période de référence étant naturellement différente.

Une touche 6a du clavier fonctionnel 6 permet l'affichage sur l'écran 5 des différentes informations ou données d'achat se trouvant sur la piste magnétique de la carte.

Une touche 6b permet l'affichage sur l'écran 5 des différentes informations d'allocations se trouvant également sur la piste magnétique. La touche "Annulation" 6d permet les rectifications nécessaires.

Le lecteur-encodeur est normalement alimenté en courant continu 12 volts, ce qui permet son utilisation sur un véhicule automobile ou un camion magasin. Mais, il peut également être branché sur le courant alternatif 220 volts, par l'intermédiaire d'un cordon et d'un transformateur redresseur séparé.

Le lecteur-encodeur qui vient d'être décrit peut être utilisé, moyennant adjonction ou connexion sur une horloge au pointage des temps de présence de personnel ou contrôle d'accès dans certaines plages horaires, à l'intérieur des locaux.

Le lecteur-encodeur peut comporter, enfin, une ou plusieurs mémoires (non représentées) de cumuls (en nombres et en valeurs) des différentes opérations d'achats et/ou d'allocations réalisées à partir de ce lecteur-encodeur (donc généralement à partir de la caisse où il se trouve) et ceci à des fins informatives ou de contrôle. Dans ce cas, il est prévu, sur le clavier fonctionnel 6, une touche 6e permettant la lecture de cette ou ces mémoires et l'affichage du contenu sur l'écran 5. Préférentiellement, il est prévu que l'actionnement de la touche de lecture 6e n'est effectivement opératoire que si une carte spéciale "contrôle" a été passée préalablement dans le lecteur-encodeur et ceci afin d'éviter la lecture pour une personne non autorisée. En ce qui concerne les opérations d'allocations par déchargement, il est prévu que sont stockés dans la mémoire de la cumulette, non les allocations elles-mêmes mais les valeurs consommées.

En cas d'erreur, si une nouvelle opération de frappe au clavier ou d'inscription intervient, il va de soi que les valeurs ne sont pas chargées plusieurs fois dans la mémoire du lecteur-encodeur.

Naturellement, dans toutes les opérations, soit de cumul d'achats, soit de promotion, il y a identification, par le lecteur-encodeur, de l'appartenance de la carte magnétique utilisée au réseau approprié disposant de ce lecteur encodeur. Cette identification ou vérification de compatibilité est assurée grace au code client ou/ et d'identification du magasin dont des éléments constitutifs ou la structure sont caractéristiques du dit réseau. Cette disposition permet l'usage de lecteur-encodeur dans différents réseaux sans risque d'erreurs.

REVENDICATIONS

1. Procédé pour enregistrer les achats effectués par des clients individuels disposant chacun d'une carte à piste magnétique personnelle, propre à un réseau de magasins, caractérisé par le fait qu'on imprime préalablement sur la carte magnétique, de façon visible, des éléments d'identification du client, le code ou numéro d'identification du magasin auquel est rattaché le client et la date d'émission ou de péremption de la carte magnétique ; qu'on enregistre préalablement sur la piste magnétique le ou les numéros de compte de client ; qu'au début de chaque période de référence déterminée, on enregistre sur la piste magnétique le millésime de cette période ; qu'on enregistre sur la piste magnétique de la carte du client le total des achats effectués par ce client dans les magasins du réseau ou dans plusieurs groupes distincts de magasins pendant une période de référence déterminée, en nombre et/ou en valeur.

2. Procédé selon la revendication 1, caractérisé par le fait que pour enregistrer les achats en nombre et/ou en valeur, on réalise d'abord une lecture du ou des totaux antérieurs en nombre et/ou en valeur tels qu'ils sont enregistrés sur la piste magnétique de la carte de client; puis on met en mémoire ce ou ces totaux antérieurs dans une mémoire externe ; puis on ajoute au (x) total ou totaux antérieurs, le ou les totaux de l'achat en cours, ce qui donne un ou des nouveaux totaux ; et à cet effet notamment on transfère ce ou ces totaux de l'achat en cours dans la mémoire externe et on réalise la ou les additions grâce à un microprocesseur ; enfin, on enregistre sur la piste magnétique le ou les nouveaux totaux au lieu et place du ou des totaux antérieurs.

3. Procédé selon l'une quelconque des revendications 1 et 2, caractérisé par le fait qu'on enregistre sur la piste magnétique une allocation correspondant à une promotion ou à une vente avec pré-paiement et à cet effet, notamment on réalise d'abord la lecture de l'allocation antérieure telle qu'elle est enregistrée sur la piste magnétique de la carte du client ; puis, on met en mémoire cette allocation antérieure dans une mémoire externe ; puis on soustrait à cette allocation antérieure l'allocation en cours d'utilisation, ce qui donne une nouvelle allocation ; enfin, on enregistre sur la piste magnétique cette nouvelle allocation en lieu et place de l'allocation

antérieure.                                              **0189691**

4. Carte magnétique pour la mise en oeuvre du procédé selon l'une quelconque des revendications 1 à 3, caractérisée par le fait que sur la piste magnétique peuvent être enregistrés des informations, code, valeur, données, susceptibles d'être lus et modifiés par simple passage de la carte dans un lecteur-encodeur approprié.

5. Carte magnétique selon la revendication 4, caractérisée par le fait que sur la carte magnétique sont enregistrés le ou les numéros de compte du client et au moins une zone d'enregistrement de données.

6. Carte magnétique selon l'une quelconque des revendications 4 et 5, caractérisée par le fait qu'elle comporte, sur la piste magnétique, au moins une zone d'enregistrement de données correspondant aux achats effectués.

7. Carte magnétique selon la revendication 6, caractérisée par le fait qu'une zone d'enregistrement de données correspondant aux achats effectués comprend plusieurs zones d'enregistrement; notamment du millésime de la période de référence ou du groupe de magasins concernés, du montant total des achats effectués pendant cette période de référence ou dans ce groupe et du nombre total d'achats ou opérations effectués pendant cette période de référence ou dans ce groupe.

8. Carte magnétique selon l'une quelconque des revendications 4 à 7, caractérisée par le fait qu'elle comporte sur la piste magnétique au moins une zone d'enregistrement pour des opérations d'allocations.

9. Carte magnétique selon la revendication 8, caractérisée par le fait que la zone d'enregistrement pour des opérations d'allocation comprend plusieurs sous-zones d'enregistrement, notamment des numéros d'allocation, le nombre de passages pendant la durée de l'allocation et l'allocation attribuée.

10. Carte magnétique selon l'une quelconque des revendications 4 à 9, caractérisée par le fait qu'elle comporte trois zones d'enregistrement des achats et une zone d'enregistrement d'allocation.

11. Lecteur-encodeur pour la mise en oeuvre du procédé selon l'une 0189691 quelconque des revendications 1 à 3, au moyen d'une carte magnétique selon l'une quelconque des revendications 4 à 10, caractérisé par le fait qu'il comprend des moyens de lecture et d'encodage (8) de la carte magnétique du client, des moyens de commande (4, 6, 7) et au moins un écran de visualisation (5).

12. Lecteur-encodeur selon la revendication 11, caractérisé par le fait que les moyens de lecture et d'encodage (8) sont reliés à un microprocesseur (11) via un bus (10) auquel est relié l'écran (5) via un contrôleur d'affichage (12), le microprocesseur (11) étant relié à une mémoire morte programmable (14) et à une mémoire vive (15).

13. Lecteur-encodeur selon l'une quelconque des revendications 11 et 12, caractérisé par le fait qu'il comporte un écran (5) pour faire apparaître les différentes informations ou données se trouvant sur la piste magnétique, pouvant comporter un nombre de positions suffisant pour l'affichage simultané de plusieurs données ou comporter des moyens de basculement permettant l'affichage alternatif de plusieurs données ou plusieurs écrans permettant de visualiser séparément plusieurs données.

14. Lecteur-encodeur sleon l'une quelconque des revendications 11 à 13, caractérisé par le fait qu'il comporte un contacteur rotatif (18) de changement de zone d'enregistrement (changement de millésime ou de groupe de magasins).

15. Lecteur-encodeur selon l'une quelconque des revendications 11 à 14, caractérisé par le fait que le clavier fonctionnel (6) comporte une touche (6a) pour l'affichage sur l'écran (5) des différentes données d'achat se trouvant sur la piste magnétique et pour la lecture des montants totaux en nombre et en valeur à la fin d'une période de référence, une touche (6c) pour l'utilisation de la zone d'enregistrement d'une allocation et une touche (6b) pour l'affichage sur l'écran (5) des différentes informations d'allocations enregistrées sur la piste magnétique de la carte du client.

16. Lecteur-encodeur selon l'une quelconque des revendications 11 à 15, caractérisé par le fait qu'il comporte des moyens d'entrée et sortie (19) permettant de le connecter à d'autres appareils de saisie, de stockage, d'affichage et de communication ; que la mémoire (15) est assistée par une alimentation batterie permettant de conserver les informations qu'elle contient lorsque l'alimentation générale est coupée ; qu'il est normalement alimenté en courant continu 12 volts, ce qui permet de l'utiliser sur un véhicule automobile.

17. Lecteur-encodeur selon l'une quelconque des revendications 11 à 16, caractérisé en ce qu'il comporte au moins une mémoire de cumuls (en nombre et en valeur) des différentes opérations d'achats et/ou d'allocation réalisés et, sur le clavier fonctionnel (6), une touche (6e) permettant la lecture de cette ou ces mémoires de cumuls et d'affichage du contenu sur l'écran (5).

18. Lecteur-encodeur selon la revendication 17, caractérisé en ce que la touche (6e) n'est opérative que si une carte contrôle a été passée préalablement dans le lecteur-encodeur.

19. Lecteur-encodeur selon l'une quelconque des revendications 11 à 18, caractérisé en ce que le clavier fonctionnel (6) apporte également une touche "annulation" (6d) permettant de revenir au début du cycle opératoire.

20. Lecteur-encodeur selon l'une quelconque des revendications 11 à 19, caractérisé par le fait que l'extrémité d'entrée de la fente (2) de réception et de guidage de la carte magnétique comporte une butée transversale (2a) d'un côté et, du côté opposé, un espace vide (2b) pour placer correctement et sans difficulté la carte magnétique.

FIG.1

FIG. 2

Office européen
des brevets

**RAPPORT DE RECHERCHE EUROPEENNE**

0189691

Numéro de la demande

EP 85 40 2474

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl 4) |
|---|---|---|---|
| A | PATENTS ABSTRACTS OF JAPAN, vol. 4, no. 82 (P-15) [563], 13 juin 1980, page 153 P 15; & JP - A - 55 47 560 (TOKYO DENKI K.K.) 04-04-1980 * Résumé * | 1-7,11 ,16 | G 07 G    1/12 G 07 F    7/02 |
| A | PATENTS ABSTRACTS OF JAPAN, vol. 1, no. 80 (E-77) [1445], 27 juillet 1977, page 1445 E 77; & JP - A - 52 16 941 (TATEISHI DENKI K.K.) 08-02-1977 * Résumé * | 1-8,11 ,12 | |
| A | GB-A-2 094 532  (E. ELINDER)  * Abrégé; figures; page 2, ligne 16 - page 3, ligne 61 * | 1,4,5, 11,16, 17 | |
| A | US-A-4 068 213  (Y. NAKAMURA)  * Abrégé; figures; colonne 1, ligne 65 - colonne 2, ligne 36 * | 1,2,4, 6,11- 13,15- 17 | G 07 G G 07 F G 06 F G 06 K |
| A | EP-A-0 116 939  (OMRON TATEISI ELECTRONICS) * Abrégé; revendications; figures * | 4,7,11 ,14,20 | |
| | ---          -/- | | |

**DOMAINES TECHNIQUES RECHERCHES (Int. Cl.4)**

Le présent rapport de recherche a été établi pour toutes les revendications

| Lieu de la recherche LA HAYE | Date d'achèvement de la recherche 25-04-1986 | Examinateur DAVID J.Y.H. |
|---|---|---|

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

OEB Form 1503 03 82

0189691

Office européen
des brevets

RAPPORT DE RECHERCHE EUROPEENNE

Numéro de la demande

EP 85 40 2474

| Catégorie | Citation du document avec indication, en cas de besoin, des parties pertinentes | Revendication concernée | CLASSEMENT DE LA DEMANDE (Int. Cl.4) |
|---|---|---|---|
| A | GB-A-2 130 412 (J.W. HALPERN)<br><br>* Figures 1,2; page 2, lignes 5-85; page 6, ligne 46 - page 7, ligne 23 *<br><br>--- | 1,4,11 -13,15 ,17 | |
| A | DE-A-2 536 648 (J. HENGSTLER)<br><br>--- | | |
| A | EP-A-0 006 596 (TELE-ALARM)<br><br>--- | | |
| A | FR-A-1 530 745 (TELECREDIT)<br><br>----- | | |

**DOCUMENTS CONSIDERES COMME PERTINENTS**   Page 2

DOMAINES TECHNIQUES RECHERCHES (Int. Cl.4)

Le présent rapport de recherche a été établi pour toutes les revendications

| Lieu de la recherche | Date d'achèvement de la recherche | Examinateur |
|---|---|---|
| LA HAYE | 25-04-1986 | DAVID J.Y.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82